(19) Europäisches Patentamt / European Patent Office / Office européen des brevets

(11) **EP 3 017 421 B1**

(12) **FASCICULE DE BREVET EUROPEEN**

(45) Date de publication et mention de la délivrance du brevet:
**30.06.2021 Bulletin 2021/26**

(21) Numéro de dépôt: **14749860.4**

(22) Date de dépôt: **01.07.2014**

(51) Int Cl.:
*G06T 1/00* *(2006.01)*

(86) Numéro de dépôt international:
**PCT/FR2014/000158**

(87) Numéro de publication internationale:
**WO 2015/001205 (08.01.2015 Gazette 2015/01)**

(54) **PROCÉDÉ D'IMPRESSION D'ÉLÉMENTS GRAPHIQUES DE SÉCURITÉ INTERDÉPENDANTS**

VERFAHREN ZUM DRUCKEN VON INTERDEPENDENTEN GRAFISCHEN SICHERHEITSMOTIVEN

METHOD FOR PRINTING INTERDEPENDENT SECURITY GRAPHICS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2013 FR 1301565**

(43) Date de publication de la demande:
**11.05.2016 Bulletin 2016/19**

(73) Titulaire: **Swiss Authentis S.A.**
**1204 Genève (CH)**

(72) Inventeurs:
- **GAUDIN, Jean-Marc**
  **F-82000 Montauban (FR)**
- **GUICHARD, Christian**
  **F-34110 Vic La Gardiole (FR)**

(74) Mandataire: **IPAZ**
**10 boulevard Victor Hugo**
**34000 Montpellier (FR)**

(56) Documents cités:
| | |
|---|---|
| EP-A2- 1 770 656 | WO-A2-2005/010684 |
| FR-A1- 2 931 979 | US-A1- 2007 022 294 |
| US-B1- 6 170 744 | US-B1- 6 886 863 |

## Description

L'invention concerne un procédé d'impression d'éléments graphiques de sécurité sur n'importe quel support à sécuriser, par exemple des documents tels que des billets de banque, des cartes grises ou d'autres documents officiels, ou des objets, ou encore des emballages de produits solides, gazeux, ou liquides tels que boissons etc.

## Contexte de l'invention

L'expansion des réseaux privés et publics de télécommunications entraine la dématérialisation des procédures administratives de gestion de droits et l'automatisation de leurs traitements afin de réduire les coûts d'exploitation des procédures administratives.

Parallèlement, les organisations ont un besoin croissant de se protéger contre les fraudes de plus en plus importantes et efficaces du fait de cette expansion des réseaux de télécommunications et de la difficulté de maîtriser la complexité des systèmes mis en œuvre.

Dans cette volonté de modernisation, la persistance d'un document dépend de la disponibilité et de la sécurité des systèmes qui le manipulent: il est obligatoire de conserver les niveaux de service de protection des droits quels que soient les incidents ou dénis de service que peuvent subir les systèmes.

Pour assurer une réponse cohérente aux besoins d'efficacité de gestion des droits, il est nécessaire de développer des systèmes qui permettent la dématérialisation d'un droit pour faciliter sa gestion et diminuer les coûts, tout en assurant sa matérialisation pour la protection et la sauvegarde de la preuve de l'existence de ce droit et sa synchronisation entre la représentation virtuelle du droit et sa matérialisation dans le monde réel.

Ceci impose l'utilisation de techniques de protection liées aux techniques d'impression des documents et de protection de type fiduciaire.

De façon similaire, les contrefaçons de produits représentent des menaces sur la sécurité des consommateurs, sur l'emploi des citoyens, et de manière générale, sur les économies des Etats.

Un domaine particulier de gestion de droits est le domaine des droits affichés sur l'écran d'un téléphone mobile. La re-matérialisation d'un ticket ou d'un billet se fait alors par l'intermédiaire d'un affichage du ticket ou du droit sur l'écran du téléphone, mais elle n'offre aujourd'hui aucune garantie sur l'authenticité de cet affichage.

## Etat de la technique

On connaît déjà un grand nombre de techniques de sécurisation de documents ou de sécurisation de transactions dans le cas où le support papier est remplacé par un écran d'affichage, par exemple un écran de téléphone mobile.

Dans le cas des techniques de sécurisation sur support papier, on connaît par exemple les guilloches, qui sont des gravures continues faites avec des couleurs spéciales. Elles ont comme inconvénient principal le fait qu'elles sont prédéfinies et identiques pour tous les documents d'une série, par exemple tous les billets de banque d'une même valeur faciale auront les mêmes guilloches, sans lien avec l'information, à savoir par exemple le numéro du billet de banque.

La technique dite du Micro Texte fait appel à des technologies d'impression qui reprennent une information variable pour chaque document. Mais le Micro Texte utilise des impressions grand public et est donc de sécurité réduite.

La technique dite du « Glossmark » utilise un hologramme difficile à reproduire, et nécessite des imprimantes spécifiques qui en limitent l'application.

La technique dite du « dataglyphe » utilise une marque sous forme de tâches de couleur réparties, discrètes, formant une signature. Mais la simple connaissance de l'existence de cette signature rend la contrefaçon possible.

La technique dite du « digimark » est un tatouage numérique « digital watermarking » dans lequel on mélange une information et une image. L'inconvénient consiste dans le fait qu'il est facile de récupérer l'information cachée dans l'image en utilisant une transformée par ondelettes.

Certaines techniques connues utilisent une clé basée sur un aléa ou un chaos, qui sont des éléments non déterministes, pour générer des solutions qui permettent une authentification forte pour chaque produit ou chaque document. Par exemple, dans cette catégorie, on connaît l'usage d'une caractéristique physique unique du document ou du produit à protéger : un code à bulles, la forme d'un flacon, l'état de surface particulier d'un papier.

Ces dernières technologies sont reconnues comme étant les plus avancées. Cependant, elles ont toutes un problème récurrent : elles ne peuvent être contrôlées que par des outils spécifiques (par exemple un lecteur de code à bulles) en liaison avec une référence en ligne.

On connaît enfin une technologie dite « Seal vector » qui est décrite dans les brevets US20130094064 et WO2012/017161. Son inconvénient réside dans le fait qu'elle nécessite une connexion en ligne avec un serveur pour calculer la comparaison entre la référence de départ et une impression scannée. En outre, la possible dérive de la tête d'impression en fonction du temps n'est pas maitrisée.

On connaît encore de par le brevet WO2010/049415 (Schreiner), une technique consistant à utiliser des marqueurs dans le but de permettre la reconnaissance de motifs basés sur un pseudo bruit. La détection par auto corrélation du pseudo bruit permet d'authentifier le document. L'inconvénient de la méthode est identique à celui du « Seal Vector » hormis la capacité de mieux maitriser les dérives de la tête d'impression.

Les techniques connues ont en outre en commun le fait que les éléments graphiques de sécurité (dits EGS) qu'elles utilisent sont appliqués de façon indépendante. C'est-à-dire que les EGS sont indépendants entre eux, et ils sont simplement empilés ou juxtaposés et ne produisent pas d'effet de sécurité supplémentaire lié à une quelconque interférence entre eux, puisque cette interférence n'existe pas. Le fait que les différents types d'EGS sont empilés ou juxtaposés est aussi lié au fait que ces EGS sont issus des techniques d'impression du fiduciaire, où on a tenté d'augmenter la sécurité des documents simplement en empilant davantage d'EGS indépendants sur un même document.

Le document US 6 886 863 B1 (MOWRY), notamment, est représentatif de ce genre de technique. Il décrit une fonte d'impression pour documents de sécurité, utilisant trois EGS, à savoir un champ de caractères alphanumériques (EGS Eligible), des lignes de fond (EGS non-éligible), et un autre champ de caractères de sécurité lisibles par une machine (EGS Eligible). Les caractères de sécurité reprennent l'information alphanumérique sous une forme encodée. Mais les lignes de fond telles que décrites ne peuvent pas contenir d'information et ne peuvent donc pas constituer un EGS éligible au sens de la présente demande de brevet. Ce document ne prévoit donc pas, et en outre ne permet pas, de créer trois EGS interdépendants par construction c'est à dire dont chacun possède des éléments de contrôle utilisés dans la construction des deux autres EGS pour faire en sorte que la modification d'un des EGS constitutifs de l'impression entraîne automatiquement une incohérence identifiable sur l'authentifiant imprimé.

Enfin, pour illustrer les solutions existantes concernant le cryptage, le document EP 1 770 656 A2 (UNISYS) décrit un procédé d'impression d'information d'authentification appliquant une étape de signature numérique à une chaine de données. Ce procédé permet la parfaite identification des parties en présence, mais ne permet pas d'assurer un lien entre différents EGS Eligibles au sens de la présente demande de brevet, garant de l'authenticité des informations.

Ces techniques connues ne peuvent pas s'auto protéger de la contrefaçon de façon certaine et ne protègent les mentions variables unitaires du document ou de l'objet contre la falsification que de manière imparfaite : soit par référence à une base de données, soit par simple duplication des mentions variables. En effet, ces techniques sont conçues d'une part pour protéger un type de document, une gamme de produits, ou un lot de fabrication, ou d'autre part pour contrôler automatiquement les valeurs contenues dans les mentions variables.

## Buts de l'invention

L'invention a pour but général de proposer un procédé d'impression d'un authentifiant comprenant des éléments graphiques de sécurité (EGS), ce procédé étant apte à créer un lien d'interdépendance entre les EGS qui le constituent, et étant propre à garantir l'intégrité, l'authenticité d'un document ou d'un objet, tout en permettant d'éviter les inconvénients précités des techniques connues.

Un but spécifique de l'invention consiste à proposer un procédé d'impression d'un ensemble d'EGS capable de s'auto-vérifier sans faire appel à une base de références stockées dans une base de données externes. Pour ce faire, les éléments graphiques de sécurité utilisés doivent pouvoir être construits grâce à des propriétés qui permettent de définir un alphabet, et de créer un codage géométrique et un codage fréquentiel.

Un autre but de l'invention est de faire en sorte qu'une tentative de falsification et/ou de contrefaçon de l'impression de l'authentifiant soit détectable, et de préférence rende le document ou plus généralement le support d'impression partiellement ou totalement impossible à valider en fonction du degré d'altération constaté des EGS.

Un autre but de l'invention est de proposer un procédé d'impression d'un ensemble d'EGS qui puisse être mis en œuvre par des imprimantes grand public, et qui soit robuste, dans le sens de permettre la validation partielle de l'intégrité du document ou de l'objet aussi bien dans le cas d'une dérive des têtes d'impression que d'une copie de l'original.

## Principe de l'invention

Le principal problème technique à résoudre par rapport à l'Etat de la Technique est de pouvoir prouver l'intégrité du document ou objet portant l'authentifiant imprimé grâce à des EGS rendus interdépendants directement par le contenu informationnel du document ou le descriptif de l'objet, et sans nécessiter de lien en temps réel avec une base de données externe.

Le principe de la solution innovante proposée est l'agencement d'Eléments Graphiques de Sécurité (EGS) imprimables ou affichables qui sont rendus interdépendants par construction.

L'interdépendance entre les EGS est réalisée en décomposant la signature numérique du contenu informationnel à l'aide d'une représentation graphique de celle-ci composée d'au moins trois éléments graphiques de sécurité possédant chacun une caractéristique physique différente. Ces caractéristiques physiques sont liées aux techniques d'impression utilisées et sont adaptées aux fonctions de protection souhaitées. Le nombre minimum de 3 EGS Eligibles interdépendants utilisés conjointement est un impératif permettant d'accroître la sécurité de l'ensemble par la multiplication des sécurités unitaires. La représentation graphique de l'ensemble des EGS est imprimée à la même résolution. La décomposition de la signature permet de définir, à minima, pour chaque EGS un alphabet et un codage géométrique. Un codage fréquentiel, quant à lui, permet de renforcer la sécurité par l'introduction d'un aléa pour créer un code de validation ou pour construire un élément coercitif entre l'alphabet et le codage géométrique.

L'authentifiant ainsi obtenu permet de combiner plusieurs niveaux de vérification sans faire appel à une base de données externe, à la différence du brevet WO 2012/017161. Chaque niveau de vérification donne une information sur le degré d'altération de l'authentifiant et permet selon l'altération de donner tout ou partie de l'information d'intégrité. A noter que c'est l'ensemble des EGS qui définit les différents niveaux d'altération et pas un seul EGS comme cela est décrit dans les brevets WO2010/049415, WO2012/017161 et US20130094064.

Par exemple, dans le brevet WO2012/017161, l'authentifiant est composé de trois EGS indépendants pour assurer l'authenticité d'un document ou d'un produit, à savoir :

- la marque robuste
- la marque fragile
- une image

L'authentification est alors réalisée par la capture de l'image des trois EGS, constituant ensemble la référence de vérification. Cette référence est stockée dans une base de données externe. Le contrôle se fait par comparaison de l'image de référence et de l'image capturée lors du contrôle sur le serveur distant.

Au contraire, la présente invention construit les EGS de façon à introduire les éléments de contrôle de chaque EGS dans la construction des deux autres EGS. Ceci est réalisé en définissant trois éléments de codage indépendants pour chaque EGS: l'alphabet, le codage géométrique et le codage fréquentiel.

De façon plus détaillée, selon le principe de l'invention :

- on choisit au moins 3 EGS dans un groupe d'EGS « éligibles » (cette notion sera expliquée plus loin) faisant partie de classes d'EGS différentes (il y a 3 classes de fonctionnalités et des sous classes de propriétés physiques).

- on sélectionne dans un ensemble de motifs, de signes ou de symboles, les « lettres » de l'alphabet de l'EGS à construire à partir de la décomposition de la signature numérique de l'information à protéger. Cet alphabet constitue les éléments de perception et de transformation lors d'une tentative de reproduction.

- on calcule le codage géométrique à partir des informations de la position de l'alphabet des deux autres EGS dans la signature numérique.

- on génère le codage fréquentiel si nécessaire en fonction des fonctionnalités souhaitées (code de validation ou élément de coercition). L'élément de coercition correspond à une donnée qui est représentée à la fois par l'alphabet et à la fois par un positionnement spatial répétitif des lettres de l'alphabet ce qui rend très sensible la partie fréquentielle de l'EGS pour le décodage.

- dans la phase de création de l'impression, on construit une interdépendance physique et logique entre les 3 EGS choisis, et l'impression ainsi obtenue forme l'authentifiant.

Dans cette solution, l'authentification d'un document ou objet (qu'on appellera dans la suite un support d'impression ou un support d'affichage, et encore plus simplement, un support d'EGS, pour simplifier l'exposé), s'effectue lors du décodage de l'authentifiant, par le contrôle d'intégrité de la construction physique et logique, au vu des informations du support d'EGS et de la qualité visuelle restituée de l'impression ou de l'affichage des EGS.

A noter que l'existence et l'unicité du support d'EGS sont assurées par des mécanismes informatiques constituant de bonnes pratiques d'émission et d'enregistrement de documents ou d'objets. Autrement dit, ce n'est pas le procédé décrit dans la présente demande de brevet qui assure l'unicité du code d'authentification, mais la spécification d'utilisation du code d'authentification par le titulaire de droits.

Plus précisément, l'invention a pour objet un procédé d'authentification consistant à imprimer un authentifiant comprenant un ensemble d'Eléments Graphiques de Sécurité (EGS) sur un support à sécuriser, tel que défini dans la revendication 1.

Selon l'invention, les EGS éligibles sont pris dans un ensemble d'EGS qui sont des représentations graphiques calculées à partir d'un ensemble de motifs à base de pixels, signes ou symboles, ces représentations graphiques étant lisibles et interprétables par un système de vision numérique, et chaque EGS possède au moins une caractéristique unique numérique ou physique qui le distingue des autres EGS.

De façon avantageuse, l'un au moins des EGS éligibles pris en combinaison est un EGS de type témoin, c'est-à-dire qu'il peut contenir des motifs, signes ou symboles qui s'altèrent lors d'une tentative de reproduction.

Le procédé selon l'invention prévoit que les éléments de codage de chaque EGS éligible sont aptes à pouvoir être décomposés selon trois axes, à savoir un axe de codage Alphabétique ou « Alphabet », un axe de codage géométrique ou « Métrique » et un axe de codage fréquentiel ou « Fréquence ».

Pour construire les EGS interdépendants, le procédé selon l'invention comporte des étapes consistant à:

- initialiser les éléments de l'application, à savoir une clé privée d'application, un code d'application et au moins trois EGS éligibles (EGS1, EGS2, EGS3, ...) ;
- initialiser les éléments de l'émetteur, à savoir un code d'émetteur et une clé privée d'émetteur ;

- construire un authentifiant à partir d'au moins trois EGS interdépendants en utilisant la décomposition de la signature d'application pour définir les trois axes de codage de chaque EGS et la signature d'émission pour contrôler l'intégrité de la construction de l'authentifiant.

De préférence, l'étape de construction de l'authentifiant comporte les étapes suivantes :

- Envoi des informations à protéger par le serveur d'émetteur au serveur d'application ;
- Calcul des éléments de base (condensat et signature d'application) du codage de l'authentifiant par le serveur d'application selon les informations à protéger transmise par le serveur d'émetteur ;
- Génération d'une clé d'index (code de l'application + code de l'émetteur + condensat + du numéro d'ordre de la demande)
- Composition par le serveur d'application du message avec les paramètres de construction de l'authentifiant (l'index, la signature d'application et la liste d'EGS à utiliser);
- Transmission cryptée dudit message par le serveur d'application au serveur d'émetteur ;
- Réception et décryptage du message par le serveur d'émetteur ;
- Construction de l'authentifiant par la décomposition de la signature d'application pour définir les trois axes de codages (Alphabétique, Métrique et Fréquentiel) de chaque EGS et calcul de la signature d'émission ;
- Impression de l'authentifiant par le serveur d'émetteur

Selon le procédé de l'invention, pour vérifier l'authentifiant, on procède de la manière suivante :

- Capturer l'authentifiant à l'aide d'un système optique d'acquisition d'image
- Traiter l'image de l'authentifiant pour en extraire les données d'Alphabet, de signature d'émetteur, des cryptogrammes de Métrique de chaque EGS, et d'Index ;
- Vérifier l'émetteur grâce au décryptage de la signature d'émetteur et auxdits cryptogrammes ;
- Reconstruire la signature d'application grâce au décodage de l'Alphabet, de la Métrique et de la Fréquence ;
- Vérifier l'intégrité de l'authentifiant grâce à la comparaison du condensat de la clé d'index et du décryptage de la signature d'application.

L'invention a également pour objet un système pour la mise en œuvre du procédé d'authentification décrit ci-dessus, ce système étant caractérisé en ce qu'il comporte :

- un serveur d'application stockant une clé privée d'application et une clé publique d'émetteur ;
- un logiciel de serveur d'application apte à recevoir les informations à protéger, à les signer électroniquement (signature d'application), à fournir les informations complémentaires nécessaires à la construction de l'authentifiant avec des EGS Eligibles sur le serveur d'émetteur
- un serveur d'émetteur stockant une clé privée d'émetteur et une clé publique d'application ;
- un logiciel de serveur d'émetteur apte à provoquer l'impression de l'authentifiant composé d'au moins trois EGS interdépendants sur un support à sécuriser, ou l'affichage dudit authentifiant sur un écran ;
- un outil de contrôle stockant la clé publique d'émetteur et la clé publique d'application et apte à acquérir l'image de l'authentifiant, à traiter l'image pour en extraire les données des EGS et à effectuer les calculs et vérification permettant de faire la vérification d'intégrité de l'authentifiant.

Le procédé selon l'invention et le dispositif pour sa mise en œuvre seront maintenant décrits plus en détail à l'aide des figures.

La figure 1 représente un schéma de principe de l'architecture matérielle et logicielle sur laquelle s'appuie la mise en œuvre du procédé selon l'invention.

La figure 2 représente un organigramme simplifié des principales étapes de la phase de codage du procédé selon l'invention.

La figure 3 représente un organigramme simplifié des principales étapes de la phase de décodage du procédé selon l'invention.

La figure 4 représente un exemple d'EGS informatif et les éléments qui le constituent. Cet exemple est appelé EGS 1 dans la description qui suit.

La figure 5 représente un exemple d'EGS cryptographique et les éléments qui le constituent. Cet exemple est appelé EGS 2 dans la description qui suit.

La figure 6 représente un exemple d'EGS témoin et les éléments qui le constituent. Cet exemple est appelé EGS 3 dans la description qui suit.

La figure 7 représente l'authentifiant issu de la génération des EGS 1, EGS 2 et EGS 3 des figures 4 à 6.

**Description détaillée de l'invention**

L'authentifiant est composé d'au moins trois éléments graphiques de sécurité. Ces EGS doivent permettre d'encoder la signature numérique de l'information du document ou objet à protéger (signature d'application). L'interdépendance entre les EGS est obtenue par décomposition de cette signature numérique pour définir les trois paramètres (Alphabet, Métrique et Fréquence) qui définissent chacun des EGS utilisés. En conséquence, chaque EGS de l'authentifiant contient une partie des informations de la signature d'application qui permet lors de la lecture de chacun des EGS de reconstruire cette signature d'application.

**Choix des Eléments Graphiques de Sécurité (EGS)**

Les Eléments Graphiques de Sécurité ou EGS constituent les briques de base pour la construction de la solution de sécurisation de supports d'EGS selon l'invention, permettant de sécuriser des supports d'EGS comme par exemple des documents imprimés et personnalisés ou des objets.

De façon générale, les EGS sont des éléments imprimables ou affichables, connus en tant que tels, possédant les caractéristiques suivantes :

- L'EGS est une représentation géométrique d'un ensemble de motifs (à savoir une combinaison de pixels), signes ou symboles, qui est calculée.
- La représentation géométrique de L'EGS est lisible et interprétable soit par l'œil humain, soit par un système de vision numérique.
- L'EGS possède au moins une caractéristique unique numérique ou physique qui le distingue des autres EGS.
- L'EGS peut contenir des motifs, signes ou symboles qui s'altèrent lors d'une tentative de reproduction.

Il existe plusieurs types d'EGS :

Un EGS est dit **informatif** lorsqu'il utilise des caractères ou des chiffres qui ne nécessitent pas de transcription complémentaire pour connaître l'alphabet utilisé.

Un EGS est dit **cryptographique** lorsqu'il utilise des motifs, des signes ou des symboles dépendant d'un algorithme de codage. On peut avoir les mêmes éléments que dans un EGS informatif, mais un décodage est nécessaire pour connaître l'alphabet utilisé.

Un EGS dit **témoin** est un EGS dont les motifs, signes ou symboles s'altèrent lors d'une tentative de reproduction. Cela permet de vérifier s'il y a eu copie ou pas du support d'EGS.

Un EGS témoin est dit **qualitatif** s'il permet uniquement de faire la distinction entre un original et n'importe laquelle de ses copies.

Un EGS témoin est dit **quantitatif** s'il permet de faire la distinction entre l'original du support, les copies issues directement de l'original, et les autres copies. Dans ce cas, un élément de sécurité permet de détecter le niveau de copie, à savoir une première copie, ou une copie ultérieure. L'information quantitative est importante car une première copie signifie que le copieur avait l'original en main, il est donc complice.

Un EGS témoin est dit **auto validant,** lorsque la caractéristique témoin vient détruire de l'information en cas de copie du support d'EGS.

On peut donner à titre d'exemples concrets d' EGS :

- Une suite de caractères imprimés constituée de 40 caractères et obtenue par un algorithme de signature de type SHA-1, est considérée comme un EGS informatif.
- Un DataMatrix ou un QRCode est considéré comme un EGS cryptographique
- Un numéro imprimé avec une encre qui possède une longueur d'onde hors du spectre des capteurs numériques des scanners est considéré comme un EGS témoin qualitatif.

**EGS Eligible** :

Parmi l'ensemble des EGS connus, seuls certains sont « éligibles » pour la mise en œuvre du procédé selon l'invention.

Un EGS éligible au sens de la présente invention est un ensemble organisé d'éléments appartenant à un alphabet, imprimables ou affichables sur un écran, formant une représentation graphique sur le support auquel l'EGS est appliqué. De façon simple, on peut dire par exemple qu'une suite de chiffres ou de lettres est éligible comme EGS utilisable pour le procédé décrit dans la présente demande de brevet.

Plus précisément, l'alphabet d'un EGS éligible est défini comme une suite finie de motifs, symboles ou signes reconnaissables de façon automatique par un équipement d'acquisition optique.

La représentation graphique, quant à elle, doit permettre de mesurer par le même équipement d'acquisition et de restituer la position relative des éléments de l'alphabet dans la représentation. On distingue deux codages dans cette représentation graphique.

Le codage dit géométrique, qui utilise l'information de présence ou d'absence d'un élément de l'alphabet à une certaine position dans la représentation graphique.

Le codage dit fréquentiel, qui utilise la séquence d'apparition des éléments de l'alphabet dans la représentation graphique, selon le sens de lecture du codage géométrique.

Afin de bien comprendre la notion d'EGS Eligible, il est donc important de comprendre que non seulement un EGS Eligible doit être capable de contenir de l'information mais aussi que les éléments de codage de l'EGS Eligible doivent pouvoir être décomposés selon trois axes de codage : un axe appelé codage Alphabétique ou « Alphabet », un axe appelé codage géométrique ou « Métrique » et un axe appelé codage fréquentiel ou « Fréquence »

Aujourd'hui, les codes barre imprimés par exemple ne sont que la représentation de données organisées séquentiellement dans un codage géométrique. En effet, dans un DataMatrix, la position d'un module noir ou blanc dans la matrice représente une valeur binaire d'un mot binaire défini selon le sens de lecture des modules. De façon simple, cela se traduit par le parcours d'une matrice de MxN où chaque élément représente un module qui est noir ou blanc. Cette matrice peut encoder un mot binaire parmi $2^{MxN}$ mots binaires. Le but recherché dans cette codification est de pouvoir représenter un maximum de mots, dans un minimum d'espace et avec un maximum de robustesse de décodage. Le mot binaire a une longueur de MxN, prend une seule valeur parmi $2^{MxN}$ valeurs, et peut être converti selon une base numérique différente (base 4, base 8, base 10, ou base 16).

Imaginons maintenant que le noir et le blanc des modules de la matrice soient remplacés par quatre lettres, soit 5 valeurs (une valeur pour chacune des quatre lettres, et une valeur correspondant à l'absence des quatre lettres). Par extension, la matrice MxN représente alors un mot quinaire de longueur MxN dont la valeur appartient à un espace de $5^{MxN}$ valeurs. La matrice représente dans ce cas une et une seule valeur.

Pour que cette matrice de modules devienne un EGS Eligible au sens du présent brevet, on déconnecte la partie « ensemble des valeurs » prises par le module, et la position d'un module donné dans la matrice.

Dans ce sens, l'Alphabet (codage Alphabétique) est défini par l'ensemble des valeurs possibles plus une qui représente l'absence de valeur.

La Métrique (codage géométrique) correspond à la matrice MxN de modules où l'on ne considère que la présence ou l'absence de lettres de l'Alphabet. Formant ainsi un mot binaire de longueur MxN qui prend une seule valeur parmi $2^{MxN}$.

La Fréquence (codage fréquentiel), quant à elle, est définie par un ordre cyclique d'apparition des lettres de l'Alphabet dans la matrice, selon le sens de parcours de la matrice, et un module doit refléter la présence d'une lettre de l'Alphabet. Cette séquence doit apparaître au moins 2 fois dans la matrice afin de confirmer lors de la lecture de la matrice l'emploi de cette séquence. Elle peut représenter une information complémentaire de coercition.

Chaque axe de codage (Alphabet, Métrique, Fréquence) représente des valeurs qui sont indépendantes des deux autres axes de codages. On entend par valeurs indépendantes le fait que chaque axe peut être lu de façon indépendante et n'a pas besoin de l'information des deux autres axes pour être décodé. Par contre la reconstruction de la signature d'application nécessite le résultat du décodage de chacun des axes et de chacun des EGS.

Remarque : les codes barres sont des cas particuliers d'EGS Eligible : l'Alphabet est composé d'une seule composante (ou lettre), le codage géométrique correspond aux codages de standards des codes barres, et le codage fréquentiel est inexistant car nous ne disposons que d'une seule lettre.

La solution proposée par l'invention impose l'utilisation d'au moins trois EGS de types différents, dont l'un est un EGS de type témoin. En outre, les EGS retenus sont interdépendants par construction, de sorte que la modification d'un des éléments constitutifs de la construction entraîne automatiquement une incohérence identifiable lors du décodage.

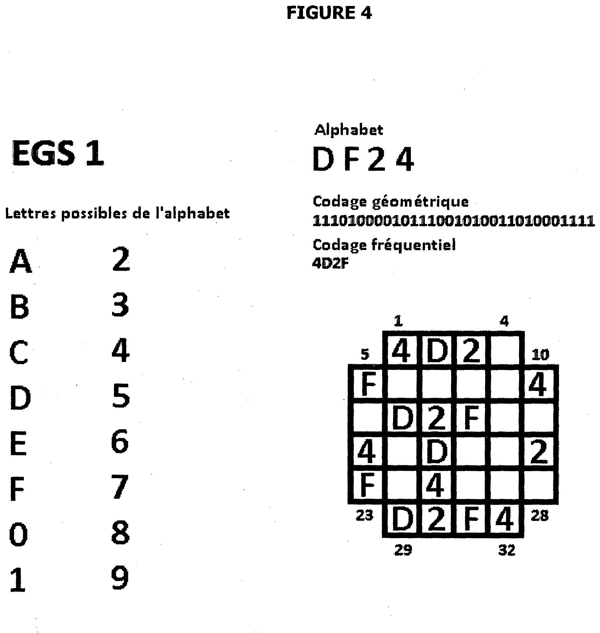

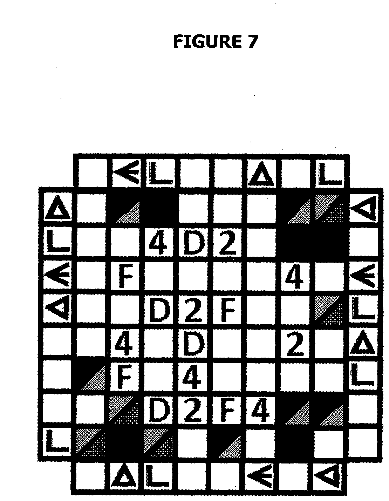

Les EGS Eligibles que l'on va utiliser pour la description seront décrits en relation avec les figures 4, 5 et 6. L'authentifiant obtenu, composé des trois EGS précédents, sera décrit en relation avec la figure 7.

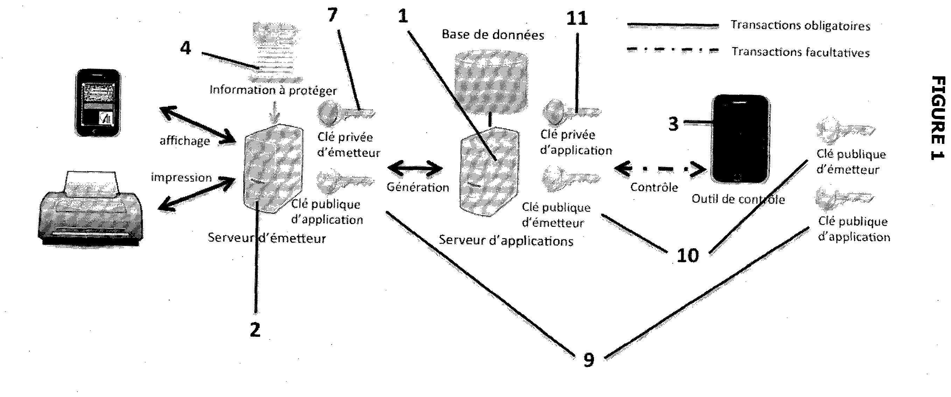

On se réfère à la figure 1, qui représente un schéma de principe de l'architecture matérielle et logicielle nécessaire à la mise en œuvre du procédé selon l'invention.

Le système comporte un serveur d'application (1) contrôlé par le titulaire des droits. Il sert à recevoir des demandes d'impression ou d'affichage d'authentifiants provenant de demandeurs ou d'émetteurs qui sont pourvus d'un serveur d'émetteur (2).

Les usagers du système, ou des entités de contrôle, peuvent être pourvus de terminaux de contrôle (3) aptes à lire les codes d'authentification imprimés sur des objets ou affichés sur des écrans, et à vérifier que les codes d'authentification sont valides.

A titre d'exemple, dans une application du type émission de documents d'identité, le titulaire des droits serait typiquement le ministère de l'intérieur, l'émetteur serait par exemple une préfecture ou une autre entité locale apte à émettre et à délivrer des documents d'identité à des usagers. Mais bien entendu, il n'y a pas de limite aux types d'applications qui sont susceptibles d'utiliser le procédé selon l'invention.

Le serveur d'émetteur (2) établit l'information à protéger, par exemple sous la forme d'un document numérique à imprimer (4). L'information à protéger sera transmise au serveur d'application (1) pour calculer la signature d'application.

Le serveur d'émetteur (2) stocke une clé privée d'émetteur (8), et une clé publique d'application (9). La clé privée d'émetteur permet de calculer les cryptogrammes de chacun des EGS et la signature d'émetteur. La clé publique d'émetteur permet de vérifier l'intégrité de la signature d'application.

Le serveur d'application (1) stocke une clé publique d'émetteur (10) et une clé privée d'application (11). La clé publique d'émetteur permet l'envoi de la réponse du serveur d'application en toute sécurité et la clé privée d'application permet le calcul de la signature d'application.

Chaque terminal de contrôle (3) a accès à la clé publique d'application (9) et à la clé publique d'émetteur (10). Ces deux clés publiques permettent de décoder la signature d'émetteur et les cryptogrammes des EGS d'une part (avec la clé publique d'émetteur) et la signature d'application reconstruite d'autre part (avec la clé publique d'application).

On va maintenant décrire le mécanisme de construction des EGS interdépendants, en relation avec la figure 1.

### 1 - **Phase d'initialisation des éléments de l'application**

- On génère une clé cryptographique asymétrique (11) de l'application : RSA, ECC, etc.
- On définit un code d'application (index : exemple : application cartes grises)
- On définit un triplet d'EGS de types différents, dont au moins un EGS témoin; (exemple : un Data Matrix, un MS code, ...)

### 2 - **Phase d'initialisation des éléments de l'Emetteur**

- On définit un code d'Emetteur
- On définit une clé cryptographique asymétrique (8) d'émetteur

### 3 - **Phase de codage, ou de construction de l'authentifiant du support d'EGS** (document ou objet) :

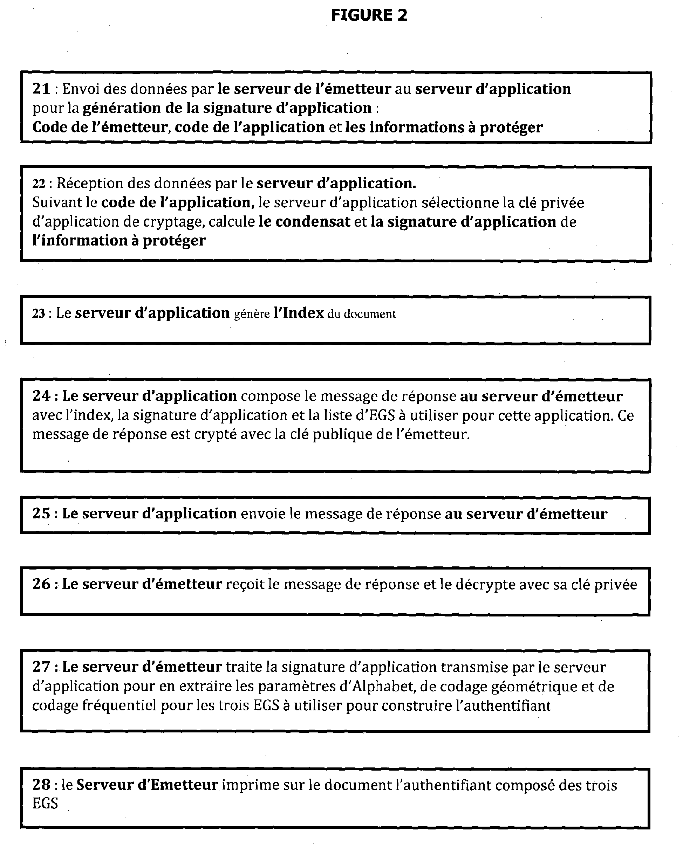

On décrit plus en détail cette phase dite de « codage » de l'authentifiant et ses étapes en liaison avec la figure 2.

Etape (21) : L'émetteur envoie au serveur d'application son code, le code de l'application, et les informations du document à protéger.

(22) : Le serveur d'application reçoit les données et en vérifie la cohérence : validité du code d'émetteur et du code d'application, conformité du format des informations. Suivant le code de l'application, le serveur d'application sélectionne la clé privée d'application, calcule **le condensat** de l'information à protéger (résultat de la fonction de hachage à sens unique SHA-1, SHA-512, ou autre) et la signature d'application de l'information à protéger.

(23): Le Serveur d'application calcule l'Index du document, égal au code d'application (par exemple pour l'application des cartes grises) + un code d'émetteur (exemple : le code de l'imprimerie nationale) + le condensat + un numéro d'ordre.

(24): le serveur d'application compose le message de réponse au serveur d'émetteur, avec l'Index, la signature d'application et la liste d'EGS à utiliser pour cette application. Ce message de réponse est crypté avec la clé publique de l'émetteur qui est connue du serveur d'application.

(25): Le serveur d'application envoie le message de réponse élaboré ci-dessus au serveur d'émetteur.

(26): Le serveur d'émetteur reçoit le message de réponse et le décrypte avec sa clé privée

(27): Le serveur d'émetteur traite la signature d'application transmise par le serveur d'application pour en extraire les paramètres d'alphabet, de codage géométrique et de codage fréquentiel pour les trois EGS à utiliser pour construire l'authentifiant :

- Extraction de l'alphabet à partir d'une partie de la signature d'application pour chaque EGS à définir
- Calcul du codage géométrique à attribuer à chaque EGS. Le codage géométrique est l'information qui permet d'ordonner les éléments de l'alphabet de chacun des EGS pour reconstruire la signature d'application. Cette information est répartie sur chacun des EGS à construire, ce qui rend les EGS interdépendants.

On peut ajouter des informations complémentaires à cette information en fonction de la capacité de codage géométrique de L'EGS.

- Si il y a lieu, calcul du codage fréquentiel à attribuer à chaque EGS.

(28): Le serveur d'émetteur imprime sur le document l'authentifiant composé des 3 EGS. On imprime donc chaque EGS sur le document ou produit à authentifier avec l'alphabet et la représentation graphique calculée : c'est l'impression de l'authentifiant.

L'impression des EGS (par exemple l'EGS de la figure 7) sur leur support (document ou autre) termine la phase de codage.

Détail de calcul de l'étape (27) :

Pour extraire les paramètres d'alphabet, de codage géométrique et de codage fréquentiel, le Serveur d'Emetteur décompose donc la signature d'application en trois séquences de caractères alphanumériques.

Par exemple, si la signature d'application est « F24DABB10E79 », les étapes de traitement sont les suivantes :

Etape (271) : Le serveur d'émetteur décompose la signature en trois parties égales : « F24D », « ABB1 », « 0E79 »

(272) : Le serveur d'émetteur en déduit trois alphabets : «DF24», «AB1», « E079 »

(273) : Le serveur d'émetteur calcule la transcription de la signature d'application suivant le numéro d'ordre de chaque caractère dans les trois alphabets, on obtient alors trois clés d'ordre CO1, CO2, CO3, représentant pour chaque partie de la signature d'application, l'ordre des lettres de l'alphabet utilisées :

    F24D => 2341 (CO1)
    ABB1 => 1223 (CO2)
    0E79 => 2134 (CO3)

(274) : Le serveur d'émetteur concatène dans le serveur de l'Emetteur deux à deux les **clés d'ordre** comme suit :

    CCO1 = CO2+CO3 = 12232134
    CCO2 = CO1+CO3 = 23412134
    CC03 = CO1+CO2 = 23411223

Il est à noter que le procédé selon l'invention utilise au moins un triplet d'EGS, mais le principe est valable au-delà de 3 EGS, à condition de faire des cycliques 2 à 2. Par exemple, dans le cas d'utilisation de 4 EGS, le premier EGS comportera les clés d'ordre 2 et 3, le deuxième EGS comportera les clés d'ordre 3 et 4, le troisième EGS comportera les clés d'ordre 4 et 1 et le quatrième EGS comportera les clés d'ordre 1 et 2.

(275) : Le serveur d'émetteur attribue à chaque EGS un alphabet et la concaténation des clés d'ordre qui ne concernent pas son propre alphabet, par exemple comme suit :

    EGS1 <= (« DF24 », CCO1)
    EGS2 <= (« AB1 », CCO2)
    EGS3 <= (« E079 », CCO3)

(276) : Le serveur d'émetteur crypte cette concaténation avec la clé privée (notée emt) de l'Emetteur. On obtient ainsi pour chaque EGS un cryptogramme, par exemple CR1 est le cryptogramme correspondant à l'EGS1. On crypte les 3 concaténations de clés d'ordre pour obtenir 3 cryptogrammes CR1, CR2, CR3 comme suit :

    CR1 = Crypt$_{emt}$(CCO1) = 1110 1000 0101 1100 1010 0110 1000 1111
    CR2 = Crypt$_{emt}$(CCO2) = 0110 0011 1010 0101 0101 1101 0000 1111
    CR3 = Crypt$_{emt}$(CCO3) = 0110 0101 1011 1100 1010 0110 1000 1111

(277) : Le serveur d'émetteur calcule la signature d'émission SE avec la clé privée de l'émetteur : les 3 cryptogrammes CR1, CR2, CR3 des EGS 1,2, et 3 sont concaténés et signés avec la clé privée de l'Emetteur. On obtient une signature SE telle que :

$$SE = Crypt_{emt}(CR1+CR2+CR3)$$

(278) : Le serveur d'émetteur ajoute les données d'index et/ou de signature d'émission pour les intégrer dans la représentation graphique d'au moins un EGS. Pour cela, on peut choisir d'intégrer ces données soit au travers du codage fréquentiel, soit au travers du codage géométrique. Pour l'exemple, l'intégration des données se fait par l'intermédiaire du codage fréquentiel de tous les EGS de l'exemple ci-dessous pour montrer le mécanisme de ce codage.

L'index et la signature d'émission SE sont cryptés et donnent Crypt$_{emt}$(Index+SE) = 072514225107252.
Pour obtenir les codes fréquentiels des EGS, on procède de la façon suivante, sur la base de l'exemple d'alphabet donné précédemment:

Pour l'EGS 1 :

L'Alphabet est DF24.
La longueur de l'alphabet de EGS 1 est de 4.
On prend le premier chiffre 0 dans le cryptogramme 072514225107252, que l'on soustrait à la longueur 4 et on obtient 4 correspondant au 4 ième caractère de l'alphabet (DF24) de EGS1, soit le chiffre 4.
Ensuite on fait 4-7 (soit le 2$^{ème}$ chiffre du cryptogramme) = -3, on prend D qui correspond au décalage de 3 caractères vers la gauche à partir du 4 dans l'alphabet d'EGS 1.
Ensuite on fait 4-2 (soit le 3$^{ème}$ chiffre du cryptogramme) = 2, on prend 2 qui correspond au décalage de 2 caractères vers la droite à partir du D dans l'alphabet (DF24) d'EGS 1.
Ensuite on fait 4-5 = -1, on prend F qui correspond au décalage de 1 caractère vers la gauche à partir du 2 dans l'alphabet (DF24) d'EGS 1.
On arrête arbitrairement le codage.
Le code fréquentiel obtenu est « 4D2F », noté CF1.

Pour l'EGS 2 :

On procède de la même manière, l'alphabet « AB1 » de EGS 2 ayant une longueur d'alphabet de 3, ce qui donne un code fréquentiel de validation CF2 tel que: « BAB1A1 » = CF2.

Pour l'EGS 3 :
On procède de la même manière avec une longueur d'alphabet de 4 ce qui donne CF3 tel que: « 9E0E7 » = CF3.

Le Codage fréquentiel CF1, CF2, CF3 des trois EGS doit impérativement comporter toutes les lettres de son alphabet. Dans le cas où on n'utilise pas le codage fréquentiel pour stocker des informations, on utilisera l'alphabet ordonné de base comme codage fréquentiel.

Remarque : rien n'interdit de coder dans les EGS d'autres informations qui ne participent pas au mécanisme de protection décrit ci-dessus.

**Phase de contrôle : Décodage de l'authentifiant**

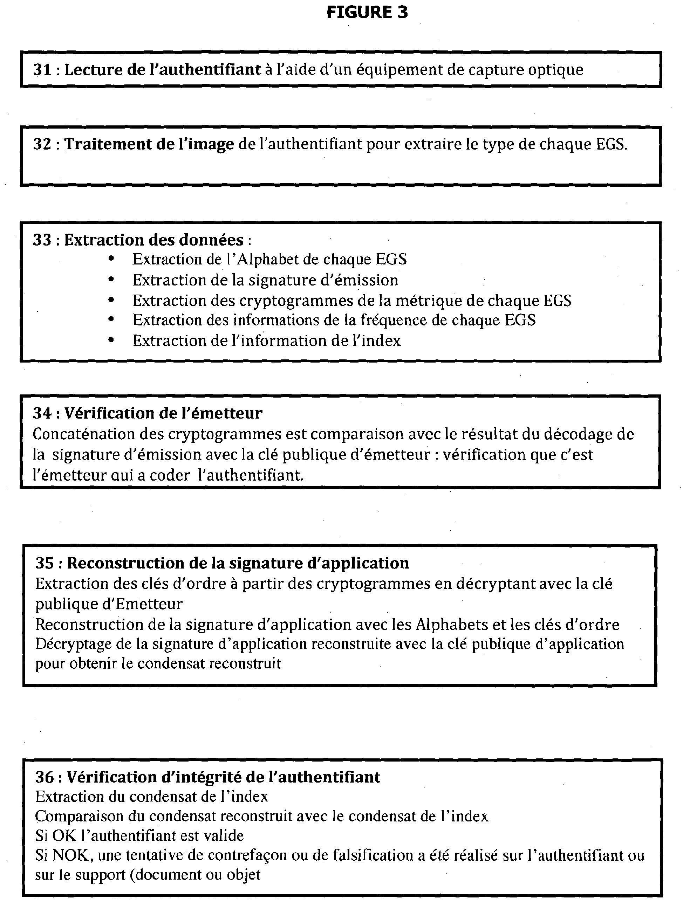

On décrit le procédé de décodage de l'authentifiant en liaison avec la figure 3.

Etape 31 - Le contrôleur 3 capture numériquement à partir du support d'EGS (à l'aide d'un scanner, d'un appareil photo numérique) l'image de l'authentifiant comprenant l'ensemble des EGS.

32 - Il identifie à l'aide de son terminal de contrôle, le type de chaque EGS grâce à un traitement de l'image.

33 - Extraction des données

• Extraction de l'Alphabet de chaque EGS
• Extraction de la signature d'émission
• Extraction des cryptogrammes de la Métrique de chaque EGS
• Extraction des informations de la Fréquence de chaque EGS
• Extraction de l'information de l'Index

Remarque : si une tentative de reproduction a été faite, l'alphabet est altéré et ne permet pas le décodage.

34 - Vérification de l'émetteur : le contrôleur (terminal de contrôleur 3) utilise la clé publique 10 de l'Emetteur (préalablement stockée) pour vérifier la signature d'émission (SE définie plus haut) et l'intégrité de chaque cryptogramme (c'est-à-dire, est-ce qu'elle vient bien de cet Emetteur ?).
Pour cela le terminal 3 du contrôleur concatène les cryptogrammes et les compare avec le résultat du décodage de la signature d'émission avec la clé publique d'émetteur.

35 - Reconstruction de la signature d'application :
Le contrôleur 3 décode les clés d'ordre à partir des cryptogrammes d'EGS (chaque cryptogramme comporte deux clés d'ordre) avec la clé publique 10 de l'émetteur. Il reconstruit la signature d'application du document en ordonnant l'alphabet, grâce aux clés d'ordre calculées et à l'alphabet trouvé.

36 - Vérification d'intégrité de l'authentifiant :
Le contrôleur 3 décrypte avec la clé publique 9 de l'application la signature d'application afin de trouver le condensat du document. Il compare le condensat ainsi trouvé, avec celui inclus dans l'Index (voir plus haut la structure de l'Index). En cas d'égalité c'est OK, c'est-à-dire que l'authentifiant (AI code) est intègre, ni contrefait, ni falsifié ; sinon NOK, signifiant par exemple qu'il y a eu copie ou tentative de reproduction de l'authentifiant.

En cas de OK, le contrôleur 3 accède à l'information complémentaire, indiquantquels sont les droits associés à l'application.

Le traitement du procédé de décodage selon l'invention se fait complètement « offline », avec seulement la clé publique 10 de l'Émetteur et la clé publique 9 de l'application.

On se réfère aux figures 4 à 6 pour décrire des exemples d'EGS utilisables dans le procédé, et à la figure 7, qui représente l'authentifiant obtenu à partir d'eux.

En figure 4, on a représenté un premier exemple d'EGS éligible, noté EGS1.

Cet EGS est un exemple d'EGS informatif.
Les signes utilisables pour l'alphabet sont les lettres de A à F et les chiffres de 0 à 9. L'alphabet retenu pour l'exemple est « DF24 ».
La matrice du codage métrique est composée de 32 cases. La présence d'un signe de l'alphabet dans la matrice représente la valeur binaire 1 et l'absence de signe représente la valeur binaire 2. La lecture de la matrice de la case 1 à la case 32 représente un mot binaire de 32 bits représentant la valeur du codage métrique.
La séquence des signes lus de la case 1 à 32 donne le codage fréquentiel. Pour être valide cette séquence doit apparaître au moins deux fois dans la matrice.

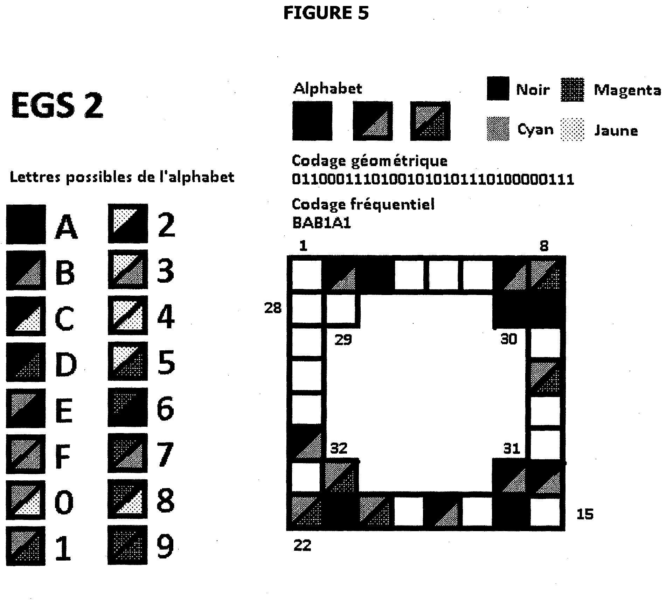

En figure 5, on a représenté un second exemple d'EGS éligible, noté EGS2.

Cet EGS est un exemple d'EGS témoin.
Les motifs utilisables pour l'alphabet sont des carrés bi-couleur prenant leur teinte parmi les quatre couleurs suivantes : Noir, Magenta, Cyan et Jaune.
Toute tentative de reproduction remplacera chaque couleur primaire pure par une trame mélangée de ces mêmes couleurs primaires. En effet, les couleurs pures Magenta, Cyan et Jaune (couleurs soustractive) sont transcrites lors de leur capture par un équipement optique selon une décomposition sur les trois couleurs additives : une rouge, une verte et une bleue (RVB). La couleur ainsi décomposée perd en qualité. Pour pouvoir la réimprimer, cette couleur décomposée en RVB va être retransformée en une décomposition de couleurs soustractives Jaune, Magenta, Cyan et Noir. Ces deux transformations suffisent à mesurer la dégradation de l'EGS témoin.
Dans EGS2, chaque carré représente une lettre de A à F ou un chiffre de 0 à 9. L'alphabet retenu pour l'exemple représente « AB1 » par le biais des motifs.
La matrice du codage métrique est composée de 32 cases. La présence d'un motif de l'alphabet représente la valeur binaire 1 et l'absence de motif représente la valeur binaire 2. La lecture de la matrice de la case 1 à la case 32 représente un mot binaire de 32 bits représentant la valeur du codage métrique.

La séquence des motifs lus de la case 1 à la case 32 donne le codage fréquentiel. Pour être valide cette séquence doit apparaître au moins deux fois dans la matrice.

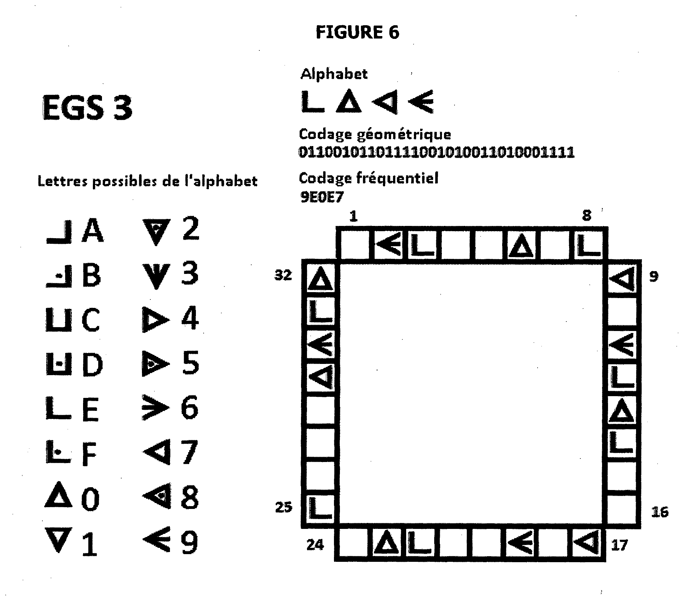

En figure 6, on a représenté un troisième exemple d'EGS éligible, noté EGS3.

Cet EGS est un exemple d'EGS cryptographique.

Les symboles utilisables pour l'alphabet sont des dessins représentants chacun une lettre de A à F ou un chiffre de 0 à 9.

Le décodage nécessite de connaître la table de correspondance entre les dessins et les lettres ou chiffres.

L'alphabet retenu pour l'exemple représente « E079 ». La matrice du codage métrique est composée de 32 cases. La présence d'un symbole de l'alphabet représente la valeur binaire 1 et l'absence de symbole représente la valeur binaire 2. La lecture de la matrice de la case 1 à la case 32 représente un mot binaire de 32 bits représentant la valeur du codage métrique.

La séquence des symboles lus de la case 1 à la case 32 donne le codage fréquentiel. Pour être valide cette séquence doit apparaître au moins deux fois dans la matrice.

En figure 7, on a représenté l'authentifiant obtenu par combinaison/superposition des trois EGS précédents. Cet authentifiant est destiné à être imprimé sur un support à sécuriser, ou à être affiché sur un écran dans le cadre d'une transaction sécurisée.

Cet authentifiant permet :

- D'être imprimé ou affiché par n'importe quel procédé d'impression
- De détecter les tentatives de reproduction au travers de la mesure d'altération des couleurs par traitement d'image de l'EGS 2.
- De vérifier l'émetteur de l'authentifiant.
- De détecter les falsifications éventuelles de l'information par la vérification de l'intégrité de la signature d'application.

**Avantages du procédé selon l'invention** :

Le procédé répond aux buts fixés et permet notamment de renforcer la sécurité d'impression d'éléments graphiques de sécurité sur des documents ou sur une grande variété d'objets dont il s'agit de prouver l'origine avec un grand degré de fiabilité.

En outre, le procédé selon l'invention permet d'imprimer des EGS sur des imprimantes grand public, puis de vérifier des EGS de façon déconnectée, indépendamment d'une base de données externe, ce qui diminue le coût unitaire et augmente la vitesse de traitement.

Enfin, le procédé selon l'invention permet de rendre détectable une tentative de falsification et/ou de contrefaçon de l'impression.

## Revendications

1. Procédé d'authentification consistant à imprimer un authentifiant comprenant un ensemble d'Eléments Graphiques de Sécurité, EGS, sur un support à sécuriser,

   - ledit authentifiant est une combinaison d'au moins trois types différents d'EGS, chacun desdits EGS étant pris dans un groupe d'EGS Éligibles ayant, chacun, des propriétés qui permettent de définir un alphabet, un codage géométrique et un codage fréquentiel ;

   **caractérisé en ce que** chacun desdits EGS est construit de manière à intégrer des éléments de contrôle utilisés dans la construction des autres EGS de manière à rendre lesdits au moins trois EGS interdépendants par construction, de sorte que la modification d'un des EGS constitutifs de l'impression entraîne automatiquement une incohérence identifiable sur l'authentifiant imprimé ;
   et **en ce que** l'interdépendance entre lesdits EGS est obtenue par décomposition d'une signature numérique d'une information du support à sécuriser pour définir l'alphabet, le codage géométrique et le codage fréquentiel qui définissent chacun desdits EGS, de sorte que chaque EGS contient une partie différente des informations de ladite signature numérique.

2. Procédé selon la revendication 1, **caractérisé en ce que** les éléments de contrôle intégrés dans chaque EGS éligible sont aptes à pouvoir être décomposés selon trois axes de codage, à savoir un axe de codage Alphabétique ou « Alphabet », un axe de codage géométrique ou « Métrique » et un axe de codage fréquentiel ou « Fréquence ».

3. Procédé selon la revendication 1 ou la revendication 2, **caractérisé en ce que** les EGS Eligibles sont pris dans un ensemble d'EGS qui sont des représentations graphiques calculées à partir d'un ensemble de motifs à base de pixels, signes ou symboles, ces représentations graphiques étant lisibles et interprétables par un système de vision numérique, et **en ce que** chaque EGS Eligible possède au moins une caractéristique unique numérique ou physique qui le distingue des autres EGS.

4. Procédé selon la revendication 3, **caractérisé en ce que** l'un au moins des EGS Eligibles pris en combinaison est un EGS de type témoin, c'est-à-dire qu'il peut contenir des motifs, signes ou symboles qui s'altèrent lors d'une tentative de reproduction.

5. Procédé selon l'une quelconque des revendications précédentes, **caractérisé en ce que** pour construire les EGS interdépendants, il comporte, des étapes consistant à:

- initialiser des éléments d'une application, à savoir une clé privée d'application (11), un code d'application, une signature d'application, et au moins trois EGS Eligibles (EGS1, EGS2, EGS3, ...) ;
- initialiser des éléments d'un émetteur, à savoir un code d'émetteur et une clé privée d'émetteur (8) ;
- construire un authentifiant à partir d'au moins trois EGS interdépendants en utilisant une décomposition de ladite signature d'application pour définir lesdits trois axes de codage de chaque EGS et la signature d'émission pour contrôler l'intégrité de la construction de l'authentifiant.

6. Procédé selon la revendication 5, **caractérisé en ce que** l'étape de construction de l'authentifiant comporte les étapes suivantes :

- Envoi des informations à protéger par un serveur d'émetteur à un serveur d'application ;
- Calcul des éléments de base (condensat et signature d'application) du codage de l'authentifiant par ledit serveur d'application selon les informations à protéger transmise par le serveur d'émetteur ;
- Génération d'une clé d'index (code de l'application + code de l'émetteur + condensat + du numéro d'ordre de la demande)
- Composition par le serveur d'application du message avec les paramètres de construction de l'authentifiant (clé d'index, la signature d'application et la liste d'EGS à utiliser);
- Transmission cryptée dudit message par ledit serveur d'application audit serveur d'émetteur ;
- Réception et décryptage du message par ledit serveur d'émetteur ;
- Construction de l'authentifiant par la décomposition de la signature d'application pour définir lesdits trois axes de codages (Alphabet, Métrique et Fréquence) de chaque EGS et calcul de la signature d'émission ;
- Impression de l'authentifiant par le serveur d'émetteur

7. Procédé selon la revendication 6, **caractérisé en ce que** pour vérifier l'authentifiant, on procède de la manière suivante :

- Capturer l'authentifiant à l'aide d'un système optique d'acquisition d'image
- Traiter l'image de l'authentifiant pour en extraire les données d'Alphabet, de signature d'émetteur, des cryptogrammes de Métrique de chaque EGS, et d'Index ;
- Vérifier l'émetteur grâce au décryptage de la signature d'émetteur et auxdits cryptogrammes ;
- Reconstruire la signature d'application grâce au décodage de l'Alphabet, de la Métrique et de la Fréquence ;
- Vérifier l'intégrité de l'authentifiant grâce à la comparaison du condensat de la clé d'index et du décryptage de la signature d'application.

8. Système pour la mise en œuvre du procédé d'authentification selon l'une quelconque des revendications précédentes, **caractérisé en ce qu'**il comporte :

- un serveur d'application (1) stockant une clé privée d'application (11) et une clé publique d'émetteur (10) ;
- un logiciel de serveur d'application apte à recevoir les informations à protéger, à les signer électroniquement (signature d'application), à fournir les informations complémentaires nécessaires à la construction de l'authentifiant avec des EGS Eligibles sur le serveur d'émetteur
- un serveur d'émetteur (2) stockant une clé privée d'émetteur (8) et une clé publique d'application (9) ;
- un logiciel de serveur d'émetteur apte à provoquer l'impression de l'authentifiant composé d'au moins trois EGS interdépendants sur un support à sécuriser, ou l'affichage dudit authentifiant sur un écran ;
- un outil de contrôle (3) stockant la clé publique d'émetteur (10) et la clé publique d'application (9) et apte à acquérir l'image de l'authentifiant, à traiter l'image pour en extraire les données des EGS et à effectuer les calculs et vérifications permettant de faire la vérification d'intégrité de l'authentifiant.

**Patentansprüche**

1. Authentifizierungsverfahren, das darin besteht, einen Authentifikator, der einen Satz von grafischen Sicherheitselementen (EGS) umfasst, auf ein zu sicherndes Medium zu drucken,

- der Authentifikator ist eine Kombination aus wenigstens drei verschiedenen Arten von EGS, wobei jedes der EGS aus einer Gruppe von zulässigen EGS entnommen ist, die jeweils Eigenschaften aufweisen, die ermöglichen, ein Alphabet, eine geometrische Codierung und eine Frequenzcodierung zu definieren;

**dadurch gekennzeichnet, dass** jedes der EGS so aufgebaut ist, dass es Prüfelemente integriert, die bei dem Aufbau der anderen EGS verwendet werden, so dass die wenigstens drei EGS aufbaubedingt voneinander abhängig sind, so dass die Modifikation eines der den Druck bildenden EGS automatisch zu einer erkennbaren Inkohärenz auf dem gedruckten Authentifikator führt;

und dass die gegenseitige Abhängigkeit zwischen den EGS erhalten wird, indem eine digitale Signatur einer Information des zu sichernden Mediums zerlegt wird, um das Alphabet, die geometrische Codierung und die Frequenzcodierung zu definieren, die jedes der EGS definieren, so dass jedes EGS einen anderen Teil der Informationen der digitalen Signatur enthält.

2. Verfahren nach Anspruch 1, **dadurch gekennzeichnet, dass** die in jedes zulässige EGS integrierten Prüfelemente geeignet sind, entlang von drei Codierungsachsen zerlegt zu werden, nämlich einer alphabetischen Codierungsachse oder "Alphabet", einer geometrischen Codierungsachse oder "Metrik" und einer Frequenzcodierungsachse oder "Frequenz".

3. Verfahren nach Anspruch 1 oder Anspruch 2, **dadurch gekennzeichnet, dass** die zulässigen EGS aus einem Satz von EGS entnommen sind, die grafische Darstellungen sind, welche aus einem Satz von Mustern auf der Basis von Pixeln, Zeichen oder Symbolen berechnet sind, wobei diese grafischen Darstellungen durch ein digitales Sichtsystem lesbar und interpretierbar sind, und dass jedes zulässige EGS wenigstens ein eindeutiges digitales oder physisches Merkmal aufweist, das es von den anderen EGS unterscheidet.

4. Verfahren nach Anspruch 3, **dadurch gekennzeichnet, dass** wenigstens eines der zulässigen EGS in Kombination ein EGS vom Kontrolltyp ist, das heißt, dass es Muster, Zeichen oder Symbole enthalten kann, die sich während eines Reproduktionsversuches ändern.

5. Verfahren nach einem der vorhergehenden Ansprüche, **dadurch gekennzeichnet, dass** es zum Aufbau der voneinander abhängigen EGS Schritte umfasst, bestehend in:

- Initialisieren von Elementen einer Anwendung, nämlich eines privaten Anwendungsschlüssels (11), eines Anwendungscodes, einer Anwendungssignatur und wenigstens drei zulässigen EGS (EGS1, EGS2, EGS3, ...);
- Initialisieren von Elementen eines Ausstellers, nämlich eines Ausstellercodes und eines privaten Ausstellerschlüssels (8);

- Aufbau eines Authentifikators aus wenigstens drei voneinander abhängigen EGS unter Verwendung einer Zerlegung der Anwendungssignatur, um die drei Codierungsachsen eines jeden EGS zu definieren, und der Ausstellersignatur, um die Unversehrtheit des Aufbaus des Authentifikators zu überprüfen.

6. Verfahren nach Anspruch 5, **dadurch gekennzeichnet, dass** der Schritt des Aufbaus des Authentifikators die folgenden Schritte umfasst:

- Senden von zu schützenden Informationen durch einen Ausstellerserver an einen Anwendungsserver;
- Berechnen der Grundelemente (Kondensat und Anwendungssignatur) der Codierung des Authentifikators durch den Anwendungsserver gemäß den durch den Ausstellerserver übermittelten zu schützenden Informationen;
- Generieren eines Indexschlüssels (Anwendungscode + Ausstellercode + Kondensat + Auftragsnummer der Anfrage)
- Zusammenstellen der Nachricht durch den Anwendungsserver, mit den Parametern zum Aufbau des Authentifikators (Indexschlüssel, Anwendungssignatur und Liste der zu verwendenden EGS);
- verschlüsseltes Übertragen der Nachricht durch den Anwendungsserver an den Ausstellerserver;
- Empfangen und Entschlüsseln der Nachricht durch den Ausstellerserver;
- Aufbau des Authentifikators durch Zerlegen der Anwendungssignatur, um die drei Codierungsachsen (Alphabet, Metrik und Frequenz) eines jeden EGS zu definieren, und Berechnen der Ausstellungssignatur;
- Drucken des Authentifikators durch den Ausstellerserver.

7. Verfahren nach Anspruch 6, **dadurch gekennzeichnet, dass** zur Überprüfung des Authentifikators folgendermaßen vorgegangen wird:

- Erfassen des Authentifikators mit Hilfe eines optischen Bilderfassungssystems;
- Verarbeiten des Bildes des Authentifikators, um die Daten von Alphabet, Ausstellersignatur, Metrik-Kryptogramme eines jeden EGS und Index zu extrahieren;
- Überprüfen des Ausstellers mit Hilfe der Entschlüsselung der Ausstellersignatur und der Kryptogramme.
- Rekonstruieren der Anwendungssignatur mit Hilfe der Dekodierung von Alphabet, Metrik und Frequenz;
- Überprüfen der Unversehrtheit des Authentifikators mit Hilfe des Vergleichs des Kondensates des Indexschlüssels sowie der Entschlüsselung der Anwendungssignatur.

8. System zum Durchführen des Authentifizierungsverfahrens nach einem der vorhergehenden Ansprüche, **dadurch gekennzeichnet, dass** es umfasst:

- einen Anwendungsserver (1), der einen privaten Anwendungsschlüssel (11) und einen öffentlichen Ausstellerschlüssel (10) speichert;
- eine Anwendungsserver-Software, die geeignet ist, die zu schützenden Informationen zu empfangen, sie elektronisch zu signieren (Anwendungssignatur), die ergänzenden Informationen, welche für den Aufbau des Authentifikators mit zulässigen EGS erforderlich sind, auf dem Ausstellerserver bereitzustellen;
- einen Ausstellerserver (2), der einen privaten Ausstellerschlüssel (8) und einen öffentlichen Anwendungsschlüssel (9) speichert;
- eine Ausstellerserver-Software, die geeignet ist, das Drucken des Authentifikators, welcher aus wenigstens drei voneinander abhängigen EGS besteht, auf ein zu sicherndes Medium oder das Anzeigen des Authentifikators auf einem Bildschirm zu bewirken;
- ein Prüfwerkzeug (3), das den öffentlichen Ausstellerschlüssel (10) und den öffentlichen Anwendungsschlüssel (9) speichert und geeignet ist, das Bild des Authentifikators zu erfassen, das Bild zu verarbeiten, um die Daten der EGS zu extrahieren, und die Berechnungen und Überprüfungen durchzuführen, die ermöglichen, die Prüfung der Unversehrtheit des Authentifikators zu vollziehen.

## Claims

1. An authentication method consisting of printing an authenticator comprising a set of graphic security elements, EGS, on a medium to be secured,

- said authenticator is a combination of at least three different types of EGS, each of said EGS being taken from a group of eligible EGS, each having properties which make it possible to define an Alphabet, a geometric coding and a frequency coding;

**characterized in that** each of said EGS is constructed so as to integrate control elements used in the construction of the other EGS so as to make said at least three EGS interdependent by construction, so that modification of one of the EGS making up the print automatically leads to an identifiable inconsistency on the printed authenticator;

and **in that** the interdependence between said EGS is obtained by decomposition of a digital signature of an item of information of the medium to be secured in order to define the alphabet, the geometric coding and the frequency coding which define each of said EGS, so that each EGS contains a different portion of the information of said digital signature.

2. The method according to claim 1, **characterized in that** the control elements integrated into each eligible EGS can be decomposable along three coding axes, namely an alphabetic or "Alphabet" coding axis, a geometric or "Metric" coding axis and a frequency or "Frequency" coding axis.

3. The method according to claim 1 or claim 2, **characterized in that** the eligible EGS are taken from a set of EGS which are graphic representations calculated from a set of patterns based on pixels, signs or symbols, these graphic representations being readable and interpretable by a digital vision system, and **in that** each eligible EGS has at least one unique digital or physical feature which distinguishes it from the other EGS.

4. The method according to claim 3, **characterized in that** at least one of the eligible EGS taken in combination is a EGS of the indicator type, i.e. it can contain patterns, signs or symbols which change during an attempt at reproduction.

5. The method according to any one of the preceding claims, **characterized in that** in order to construct the interdependent EGS it includes steps consisting of:

- initializing the elements of an application, namely an application private key (11), an application code, an application signature, and at least three eligible EGS (EGS1, EGS2, EGS3, etc.);
- initializing the elements of a transmitter, namely a transmitter code and a transmitter private key (8);
- constructing an authenticator from at least three interdependent EGS using a decomposition of said application signature to define said three coding axes of each EGS and the transmission signature to control the integrity of the construction of the authenticator.

6. The method according to claim 5, **characterized in that** the step of constructing the authenticator includes the following steps:

- Sending of the information to be protected to an application server by a transmitter server;
- Calculation of the basic elements (hash value and application signature) of the coding of the authenticator by said application server according to the information to be protected transmitted by the transmitter server;

- Generation of an index key (application code + transmitter code + hash value + request order number)

- Composition of the message by the application server using the authenticator's construction parameters (index key, application signature and the list of EGS to be used);

- Encrypted transmission of said message to said transmitter server by said application server;

- Receipt and decryption of the message by said transmitter server;

- Construction of the authenticator by decomposing the application signature to define said three coding axes (Alphabet, Metric and Frequency) of each EGS and calculating the transmission signature;

- Printing of the authenticator by the transmitter server

7. The method according to claim 6, **characterized in that** to verify the authenticator the process is as follows:

- Capturing the authenticator using an image acquisition optical system

- Processing the image of the authenticator to extract the Alphabet data, the transmitter signature data, the data for the Metric cryptograms of each EGS, and the Index data from it;

- Verifying the transmitter by means of the decryption of the transmitter signature and said cryptograms;

- Reconstructing the application signature by means of the decoding of the Alphabet, the Metric and the Frequency;

- Verifying the integrity of the authenticator by means of the comparison of the hash value of the index key and the decryption of the application signature.

8. A system for implementing the authentication method according to any one of the preceding claims, **characterized in that** it includes:

- an application server (1) storing an application private key (11) and a transmitter public key (10);

- application server software capable of receiving the information to be protected, and signing it electronically (application signature), providing the complementary information necessary for the construction of the authenticator with eligible EGS on the transmitter server

- a transmitter server (2) storing a transmitter private key (8) and an application public key (9);

- transmitter server software capable of triggering the printing of the authenticator composed of at least three interdependent EGS on a medium to be secured, or the display of said authenticator on a screen;

- a control tool (3) storing the transmitter public key (10) and the application public key (9) and capable of acquiring the image of the authenticator, processing the image to extract the GSE data from it and carrying out the calculations and verifications making it possible to verify the integrity of the authenticator.

**FIGURE 1**

## FIGURE 2

**21** : Envoi des données par **le serveur de l'émetteur** au **serveur d'application** pour la **génération de la signature d'application** : **Code de l'émetteur, code de l'application** et **les informations à protéger**

**22** : Réception des données par le **serveur d'application.** Suivant le **code de l'application,** le serveur d'application sélectionne la clé privée d'application de cryptage, calcule **le condensat** et **la signature d'application** de **l'information à protéger**

**23** : Le **serveur d'application** génère **l'Index** du document

**24** : **Le serveur d'application** compose le message de réponse **au serveur d'émetteur** avec l'index, la signature d'application et la liste d'EGS à utiliser pour cette application. Ce message de réponse est crypté avec la clé publique de l'émetteur.

**25** : **Le serveur d'application** envoie le message de réponse **au serveur d'émetteur**

**26** : **Le serveur d'émetteur** reçoit le message de réponse et le décrypte avec sa clé privée

**27** : **Le serveur d'émetteur** traite la signature d'application transmise par le serveur d'application pour en extraire les paramètres d'Alphabet, de codage géométrique et de codage fréquentiel pour les trois EGS à utiliser pour construire l'authentifiant

**28** : le **Serveur d'Emetteur** imprime sur le document l'authentifiant composé des trois EGS

## FIGURE 3

**31 : Lecture de l'authentifiant** à l'aide d'un équipement de capture optique

**32 : Traitement de l'image** de l'authentifiant pour extraire le type de chaque EGS.

**33 : Extraction des données :**
- Extraction de l'Alphabet de chaque EGS
- Extraction de la signature d'émission
- Extraction des cryptogrammes de la métrique de chaque EGS
- Extraction des informations de la fréquence de chaque EGS
- Extraction de l'information de l'index

**34 : Vérification de l'émetteur**
Concaténation des cryptogrammes est comparaison avec le résultat du décodage de la signature d'émission avec la clé publique d'émetteur : vérification que c'est l'émetteur qui a coder l'authentifiant.

**35 : Reconstruction de la signature d'application**
Extraction des clés d'ordre à partir des cryptogrammes en décryptant avec la clé publique d'Emetteur
Reconstruction de la signature d'application avec les Alphabets et les clés d'ordre
Décryptage de la signature d'application reconstruite avec la clé publique d'application pour obtenir le condensat reconstruit

**36 : Vérification d'intégrité de l'authentifiant**
Extraction du condensat de l'index
Comparaison du condensat reconstruit avec le condensat de l'index
Si OK l'authentifiant est valide
Si NOK, une tentative de contrefaçon ou de falsification a été réalisé sur l'authentifiant ou sur le support (document ou objet

**FIGURE 4**

# EGS 1

Lettres possibles de l'alphabet

A     2

B     3

C     4

D     5

E     6

F     7

0     8

1     9

Alphabet

# D F 2 4

Codage géométrique
**11101000010111001010011010001111**

Codage fréquentiel
**4D2F**

## FIGURE 5

EGS 2

Lettres possibles de l'alphabet

Alphabet

Codage géométrique
011000111010010101011101000001111

Codage fréquentiel
BAB1A1

## FIGURE 6

**EGS 3**

Alphabet

L △ ◁ ◀

Codage géométrique
0110010110111100101001101010001111

Lettres possibles de l'alphabet

Codage fréquentiel
9E0E7

⌐ A    ▼ 2

⌐ B    ▼ 3

⊔ C    ▷ 4

⊔ D    ▷ 5

L E    ≽ 6

L F    ◁ 7

△ 0    ◀ 8

▼ 1    ◀ 9

**FIGURE 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20130094064 A
- WO 2012017161 A
- WO 2010049415 A, Schreiner
- US 6886863 B1, MOWRY
- EP 1770656 A2